(19) Europäisches Patentamt
European Patent Office
Office européen des brevets

(11) EP 0 796 297 B1

(12) EUROPÄISCHE PATENTSCHRIFT

(45) Veröffentlichungstag und Bekanntmachung des Hinweises auf die Patenterteilung:
**07.04.1999 Patentblatt 1999/14**

(21) Anmeldenummer: **95941019.2**

(22) Anmeldetag: **25.11.1995**

(51) Int Cl.[6]: **C09B 53/02**, C09B 55/00, B41M 5/38

(86) Internationale Anmeldenummer:
**PCT/EP95/04651**

(87) Internationale Veröffentlichungsnummer:
**WO 96/17892 (13.06.1996 Gazette 1996/27)**

# (54) METHINFARBSTOFFE AUF BASIS VON FORMYLAMINOPYRIDONEN

METHINE DYES BASED ONE FORMYLAMINOPYRIDONES

COLORANTS METHINE A BASE DE FORMYLAMINOPYRIDONES

(84) Benannte Vertragsstaaten:
**BE CH DE FR GB IT LI**

(30) Priorität: **07.12.1994 DE 4443567**

(43) Veröffentlichungstag der Anmeldung:
**24.09.1997 Patentblatt 1997/39**

(73) Patentinhaber: **BASF AKTIENGESELLSCHAFT
67056 Ludwigshafen (DE)**

(72) Erfinder:
- **SENS, Rüdiger
D-68165 Mannheim (DE)**
- **SCHMIDT, Andreas, Johann
D-67251 Freinsheim (DE)**
- **RAULFS, Friedrich-Wilhelm
Kobe 658 (JP)**
- **ETZBACH, Karl-Heinz
D-67227 Frankenthal (DE)**

(56) Entgegenhaltungen:
**EP-A- 0 480 252** **DE-A- 3 524 519**

- **DATABASE WPI Section Ch, Week 9308 Derwent Publications Ltd., London, GB; Class A89, AN 93-061445 & JP,A,05 008 562 ( MITSUI TOATSU CHEM INC) , 19.Januar 1993**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 796 297 B1

Printed by Jouve, 75001 PARIS (FR)

## Beschreibung

Die vorliegende Erfindung betrifft neue Methinfarbstoffe der Formel I

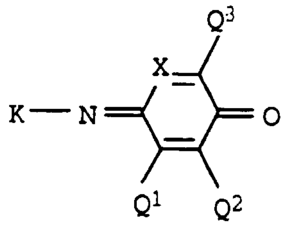

(I),

in der

| | |
|---|---|
| K | einen 5- oder 6-gliedrigen carbocyclischen oder heterocyclischen Rest, |
| X | Stickstoff oder einen Rest der Formel C—$Q^1$ und |
| $Q^1$, $Q^2$ und $Q^3$ | unabhängig voneinander jeweils Wasserstoff, $C_1$-$C_6$-Alkyl, das gegebenenfalls durch 1 oder 2 Sauerstoffatome in Etherfunktion unterbrochen ist, Benzyl, $C_3$-$C_8$-cycloalkyl, gegebenenfalls substituiertes Phenyl, $C_1$-$C_4$-Fluoralkyl, $C_1$-$C_6$-Alkoxy, Benzyloxy, gegebenenfalls substituiertes Phenoxy, $C_1$-$C_6$-Alkylthio, Halogen, Cyano, Formylamino oder einen Rest der Formel $R^3$, -CO-OR$^1$, -CO-NHR$^1$, -CO-NH-CO-R$^1$, -CO-NH-CO-R$^3$, -CO-NH-SO$_2$-R$^3$, -NH-CO-R$^1$, -NH-CO-OR$^1$, -NH-CO-NR$^1$R$^2$, NH-CS-OR$^1$, -NH-CS-NR$^1$R$^2$, -NH-CO-R$^3$, -NH-SO$_2$-R$^1$, -NH-SO$_2$-R$^3$ oder -NH-SO$_2$-NR$^1$R$^2$, worin $R^1$ und $R^2$ unabhängig voneinander jeweils für $C_1$-$C_{13}$-Alkyl, das gegebenenfalls substituiert ist und durch 1 bis 3 Sauerstoffatome in Etherfunktion unterbrochen sein kann, $C_3$-$C_8$-Cycloalkyl, gegebenenfalls substituiertes Phenyl oder -NR$^1$R$^2$ auch für Amino und $R^3$ für einen 5- oder 6-gliedrigen aromatischen heterocyclischen Rest, der gegebenenfalls benzoanelliert ist und ein oder mehrere Heteroatome, ausgewählt aus der Gruppe, bestehend aus Stickstoff, Sauerstoff und Schwefel, aufweist, stehen, oder $Q^1$ und $Q^2$ zusammen mit den Kohlenstoffatomen, an die sie geknüpft sind, einen 5-oder 6-gliedrigen carbocyclischen oder heterocyclischen Ring bedeuten, |

mit der Maßgabe, daß mindestens einer der Reste $Q^1$, $Q^2$ oder Q3 Formylamino bedeutet,
sowie ein Verfahren zu ihrer thermischen Übertragung.

Aus der US-A-5 310 942 ist die thermische Übertragung von Pyridonfarbstoffen bekannt. Es hat sich jedoch gezeigt, daß die dort zur Anwendung kommenden Farbstoffe noch anwendungstechnische Mängel aufweisen. Methinfarbstoffe für die Sublimations-Transferaufzeichnung sind ferner aus der DE-A-3524519 bekannt.

Aufgabe der vorliegenden Erfindung war es, neue Methinfarbstoffe bereitzustellen, die sich vorteilhaft für Non-impact-printing-Verfahren, beispielsweise für den thermischen Transfer eignen und dabei insbesondere hohe thermische Stabilität, hohe Lichtechtheit, hohe Farbstarke und hohe Brillanz aufweisen. Die neuen Farbstoffe sollten auch vorteilhaft zum Färben oder Bedrucken von textilen Materialien geeignet sein.

Demgemäß wurden die eingangs näher bezeichneten Methinfarbstoffe der Formel I gefunden.

K stellt einen 5- oder 6-gliedrigen carbocyclischen oder heterocyclischen, vorzugsweise aromatischen, Rest dar, der gegebenenfalls substituiert ist und benzoanelliert sein kann.

Reste K können sich z.B. von Komponenten aus der Benzol-, Indol-, Chinolin-, Naphthalin-, Pyrrol-, Thiazol-, Benzimidazol-, Benzthiazol-, Thiophen- oder Pyridinreihe ableiten.

Wichtige Reste K sind z.B. solche der Formeln IIa bis IIj

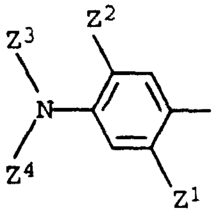 , 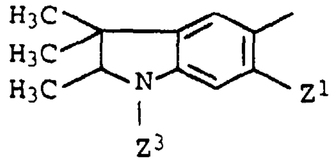 , 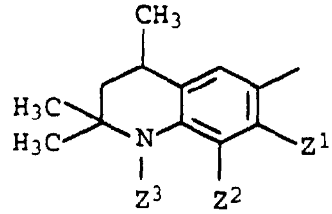 ,

(IIa) (IIb) (IIc)

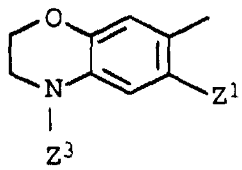 , 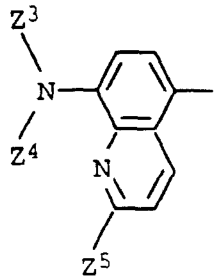 , 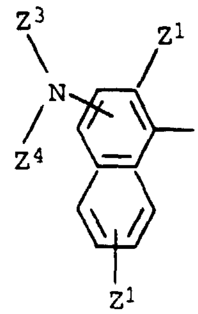 ,

(IId) (IIe) (IIf)

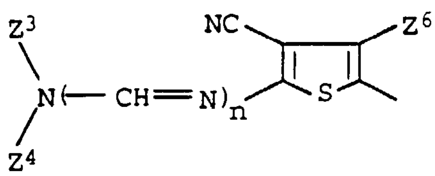 , 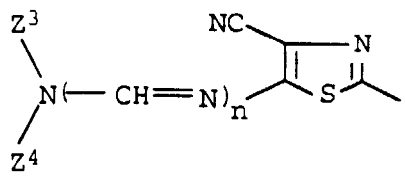 ,

(IIg) (IIh)

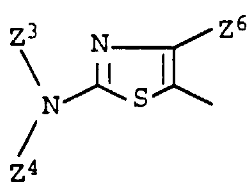 oder 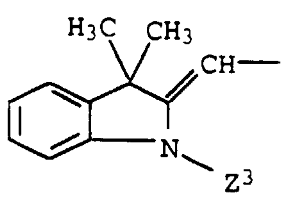

(IIi) (IIj)

worin

n für 0 oder 1,

$Z^1$ für Wasserstoff, $C_1$-$C_6$-Alkyl, das gegebenenfalls durch 1 oder 2 Sauerstoffatome in Etherfunktion unterbrochen ist, Hydroxy, $C_1$-$C_6$-Alkoxy, $C_1$-$C_6$-Alkylsulfonylamino, $C_1$-$C_6$-Mono- oder Dialkylaminosulfonylamino oder den Rest -NHCOZ$^7$ oder -NHCO$_2$Z$^7$, wobei $Z^7$ die Bedeutung von Phenyl, Benzyl, Tolyl oder $C_1$-$C_6$-Alkyl, das gegebenenfalls durch ein Sauerstoffatom in Etherfunktion unterbrochen ist, besitzt,

$Z^2$ für Wasserstoff, Halogen, $C_1$-$C_6$-Alkyl oder $C_1$-$C_6$-Alkoxy,

$Z^3$ und $Z^4$ unabhängig voneinander jeweils für Wasserstoff, $C_1$-$C_{13}$-Alkyl, das gegebenenfalls substituiert ist und durch 1 bis 3 Sauerstoffatome in Etherfunktion unterbrochen sein kann, $C_3$-$C_4$-Alkenyl, $C_3$-$C_8$-Cycloalkyl, Phenyl oder Tolyl oder zusammen mit dem sie verbindenden Stickstoffatom für einen 5- oder 6-gliedrigen gesättigten heterocyclischen Rest, der gegebenenfalls weitere Heteroatome enthält,

$Z^5$ für Wasserstoff oder $C_1$-$C_6$-Alkyl und

$Z^6$ für Wasserstoff, Halogen, $C_1$-$C_6$-Alkyl, gegebenenfalls substituiertes Phenyl, gegebenenfalls substituiertes Benzyl, $C_3$-$C_8$-Cycloalkyl, Thienyl, Hydroxy, $C_1$-$C_6$-Alkoxy, $C_1$-$C_6$-Alkylthio oder $C_1$-$C_6$-Monoalkylamino stehen.

Alle in den obengenannten Formeln auftretenden Alkyl- oder Alkenylgruppen können sowohl geradkettig als auch verzweigt sein.

Wenn in den obengenannten Formeln substituierte Alkylreste auftreten, so können als Substituenten, sofern nicht anders vermerkt, z.B. Cyclohexyl, gegebenenfalls substituiertes Phenyl, $C_1$-$C_8$-Alkanoyloxy, $C_1$-$C_8$-Alkylaminocarbonyloxy, $C_1$-$C_8$-Alkoxycarbonyl, $C_1$-$C_8$-Alkoxycarbonyloxy, wobei die Alkylkette der drei letztgenannten Reste gegebenenfalls durch 1 bis 3 Sauerstoffatome in Etherfunktion unterbrochen ist und durch Phenyl oder Phenoxy substituiert sein kann, Cyclohexyloxy, Phenoxy, Halogen, Hydroxy, Carboxyl oder Cyano in Betracht kommen. Die Alkylreste weisen dabei in der Regel 1 oder 2 Substituenten auf.

Wenn in den obengenannten Formeln Alkylreste auftreten, die durch mehrere Sauerstoffatome in Etherfunktion unterbrochen sind, so sind, solche Alkylreste bevorzugt, die durch 1 oder 2 Sauerstoffatome in Etherfunktion unterbrochen sind.

Wenn in den obengenannten Formeln substituierte Phenylreste auftreten, so können als Substituenten, z.B. $C_1$-$C_8$-Alkyl, $C_1$-$C_8$-Alkoxy, Halogen, dabei insbesondere Chlor oder Brom, Nitro oder Carboxyl in Betracht kommen. Die Phenylreste weisen dabei in der Regel 1 bis 3 Substituenten auf.

Geeignete Reste $Q^1$, $Q^2$, $Q^3$, $R^1$, $R^2$, $Z^1$, $Z^2$, $Z^3$, $Z^4$, $Z^5$, $Z^6$ und $Z^7$ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl oder 2-Methylpentyl.

Reste $R^1$, $R^2$, $Z^3$ und $Z^4$ sind weiterhin z.B. Heptyl, Octyl, 2-Ethylhexyl, Isooctyl, Nonyl, Isononyl, Decyl, Isodecyl, Undecyl, Dodecyl, Tridecyl oder Isotridecyl. [Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. Al, Seiten 290 bis 293, sowie Vol. A 10, Seiten 284 und 285).]

Reste $Q^1$, $Q^2$, $Q^3$, $R^1$, $R^2$, $Z^1$, $Z^3$, $Z^4$ und $Z^7$ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 4-Methoxybutyl, 2- oder 4-Ethoxybutyl, 3,6-Dioxaheptyl, 3,6-Dioxaoctyl, 3,7-Dioxaoctyl oder 4,7-Dioxaoctyl.

Reste $R^1$, $R^2$, $Z^3$ und $Z^4$ sind weiterhin z.B. 2- oder 3-Butoxypropyl, 2- oder 4-Butoxybutyl, 4,8-Dioxanonyl, 3,7-Dioxanonyl, 4,7-Dioxanonyl, 4,8-Dioxadecyl, 3,6,9-Trioxadecyl oder 3,6,9-Trioxaundecyl.

Reste $Q^1$, $Q^2$, $Q^3$, $Z^1$, $Z^2$ und $Z^6$ sind weiterhin z.B. Methoxy, Ethoxy, Propoxy, Isopropoxy, Butoxy, Isobutoxy, sec-Butoxy, Pentyl, Isopentyloxy, Neopentyloxy oder Hexyloxy.

Reste $Q^1$, $Q^2$, $Q^3$, $R^1$, $R^2$ und $Z^6$ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2,6-Dichlorphenyl, 2-, 3- oder 4-Nitrophenyl oder 2-, 3- oder 4-Carboxylphenyl.

Reste $Q^1$, $Q^2$, $Q^3$, $Z^3$, $Z^4$ und $Z^6$ sind weiterhin z.B. Cyclopropyl, Cyclobutyl, Cyclopentyl, Cyclohexyl, Cycloheptyl oder Cyclooctyl.

Reste $R^1$, $R^2$, $Z^3$ und $Z^4$ sind weiterhin z.B. Cyclohexylmethyl, 1- oder 2-Cyclohexylethyl, Carboxylmethyl, 2-Carboxylethyl, 2- oder 3-Carboxylpropyl, Trifluormethyl, 2-Chlorethyl, 2-Cyclohexyloxyethyl, Phenoxymethyl, 2-Phenoxyethyl, 2- oder 3-Phenoxypropyl, Benzyl, 2-Methylbenzyl, 1- oder 2-Phenylethyl, 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl, 2- oder 3-(2-Ethoxyethoxycarbonyloxy)propyl, 2-Methylaminocarbonyloxyethyl oder 2-Ethylaminocarbonyloxyethyl.

Reste $Q^1$, $Q^2$, $Q^3$, $Z^2$ und $Z^6$ sind weiterhin z.B. Fluor, Chlor oder Brom.

Reste $Q^1$, $Q^2$, $Q^3$ und $Z^6$ sind weiterhin z.B. Fluormethyl, Difluormethyl, Trifluormethyl, 1,1,1-Trifluorethyl,

Pentylfluorethyl, Bis(trifluormethyl)methyl, Heptafluorpropyl, Methylthio, Ethylthio, Propylthio, Isopropylthio, Butylthio, Isobutyltho, sec-Butylthio, Pentylthio, Isopentylthio, Neopentylthio, tert-Pentylthio oder Hexylthio.

Reste $Q^1$, $Q^2$ und $Q^3$ sind weiterhin z.B. Phenoxy, 2-, 3- oder 4-Methylphenoxy, 2-, 3- oder 4-Methoxyphenoxy oder 2-, 3- oder 4-Chlorphenoxy.

Reste $Z^1$ sind z.B. Methylsulfonylamino, Ethylsulfonylamino, Propylsulfonylamino, Isopropylsulfonylamino, Butylsulfonylamino, Pentylsulfonylamino, Hexylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino, Mono- oder Dipentylaminosulfonylamino, Mono- oder Dihexylaminosulfonylamino oder (N-Methyl-N-ethylaminosulfonyl)amino.

Reste $Z^6$ sind weiterhin, z.B. Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino oder Hexylamino.

Reste $Z^3$ und $Z^4$ sind weiterhin z.B. Allyl oder Methallyl.

Wenn $Z^3$ und $Z^4$ zusammen mit dem sie verbindenden Stickstoffatom einen 5- oder 6-gliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-($C_1$-$C_4$-Alkyl)piperazinyl in Betracht kommen.

Wenn $Q^1$ und $Q^2$ zusammen mit den Kohlenstoffatomen, an die sie geknüpft sind, einen 5- oder 6-gliedrigen carbocyclischen oder heterocyclischen Ring bedeuten, so kann dafür z.B. der Pyrrol-, Benzol- oder Pyridinring in Betracht kommen. Diese Ringe können auch substituiert und/oder gesättigt sein.

Reste $R^3$ leiten sich von einem 5- oder 6-gliedrigen aromatischen heterocyclischen Rest ab, der gegebenenfalls benzoanelliert ist und der ein oder mehrere Heteroatome, ausgewählt aus der Gruppe, bestehend aus Stickstoff, Sauerstoff und Schwefel, aufweist.

Geeignete heterocyclische Grundkörper, die Substituenten tragen können, von denen sich die Reste $R^3$ ableiten, sind z.B. Pyrrol, Furan, Thiophen, Pyrazol, Imidazol, Oxazol, Thiazol, Isothiazol, 1,2,4-Triazol, 1,2,4-Oxadiazol, 1,3,4-Oxadiazol, 1,2,4-Thiadiazol, 1,3,4-Thiadiazol, Pyridin, Pyridazin, Pyrimidin oder Pyrazin.

Hervorzuheben sind dabei Heterocyclen aus der Pyrrol-, Thiophen-, Isoxazol-, Pyridin- oder Pyridazinreihe.

Als Reste $R^3$-CO oder $R^3$-$SO_2$ kommen insbesondere solche 5- oder 6-gliedrigen aromatischen heterocyclischen Reste in Betracht, die sich von den folgenden heterocyclischen Carbonsäuren $R^3$-COOH oder Sulfonsäuren $R^3$-$SO_3H$ ableiten:

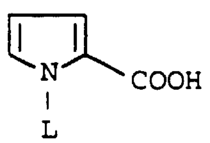 ,

(IIIa)

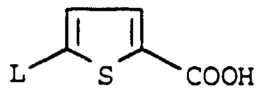 ,

(IIIb)

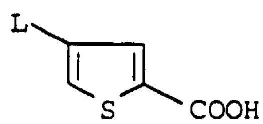 ,

(IIIc)

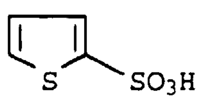 ,

(IIId)

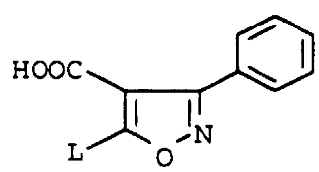 ,

(IIIe)

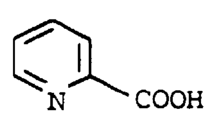 ,

(IIIf)

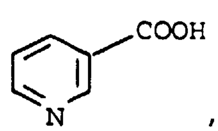 ,

(IIIg)

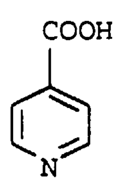 ,

(IIIh)

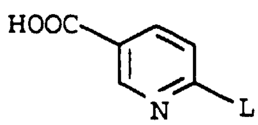

(IIIi)

oder

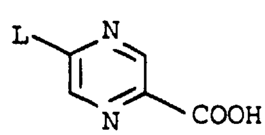 ,

(IIIj)

wobei L jeweils für $C_1$-$C_4$-Alkyl steht.

Als Reste $R^3$ kommen insbesondere die Reste der Formeln IIIa bis IIIj in Betracht, worin die Carboxyl- oder Sulfonsäurereste durch eine Einfachbindung ersetzt sind.

Bevorzugt sind Methinfarbstoffe der Formel I, in der $Q^1$, $Q^2$ und $Q^3$ unabhängig voneinander jeweils Wasserstoff, Halogen, $C_1$-$C_4$-Alkyl, $C_1$-$C_4$-Alkoxy, Formylamino oder einen Rest der Formel -NH-CO-$R^1$ oder -NH-CO-$OR^1$ bedeuten, worin $R^1$ jeweils die obengenannte Bedeutung besitzt.

Weiterhin bevorzugt sind Methinfarbstoffe der Formel I, in der K einen Rest der Formel IIa, IIc oder IIi bedeutet, wobei der Rest der Formel IIa besonders zu nennen ist.

Weiterhin bevorzugt sind Methinfarbstoffe der Formel I, in der mindestens einer der Reste $Q^2$ oder $Q^3$ Formylamino bedeutet und $Q^1$ von Formylamino verschieden ist.

Besonders bevorzugt sind Methinfarbstoffe der Formel I, in der $Q^1$ Wasserstoff, $C_1$-$C_4$-Alkyl, Halogen oder einen Rest der Formel -NH-CO-$R^1$, worin $R^1$ für $C_1$-$C_6$-Alkyl, das gegebenenfalls durch Phenyl, Halogen oder Hydroxy substituiert ist, oder Cyclohexyl steht, und $Q^2$ und $Q^3$ unabhängig voneinander jeweils Wasserstoff $C_1$-$C_4$-Alkyl, Formylamino oder einen Rest der Formel -NH-CO-$R^1$, worin $R^1$ für $C_1$-$C_6$-Alkyl oder Tolyl steht, bedeuten.

Ganz besonders bevorzugt sind Methinfarbstoffe der Formel Ia

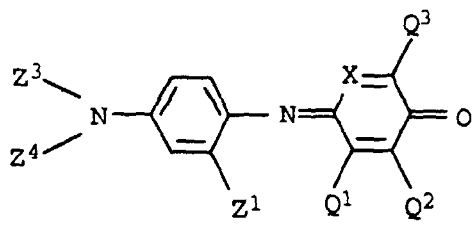

(Ia)

in der

| | |
|---|---|
| X | Stickstoff oder einen Rest der Formel C—$Q^1$, wobei Stickstoff besonders hervorzuheben ist, |
| $Z^1$ | Wasserstoff, $C_1$-$C_4$-Alkyl oder $C_2$-$C_5$-Alkanoylamino, |
| $Z^3$ | und $Z^4$ unabhängig voneinander jeweils $C_1$-$C_6$-Alkyl, das gegebenenfalls durch Hydroxy substituiert ist, Benzyl, Cyclohexyl, Phenyl oder Tolyl, |
| $Q^1$ | Wasserstoff, $C_1$-$C_4$-Alkyl, $C_1$-$C_4$-Alkoxy oder einen Rest der Formel -NH-CO-$R^1$ und |
| $Q^2$ | und $Q^3$ unabhängig voneinander jeweils Wasserstoff, $C_1$-$C_4$-Alkyl, C1-C4-Alkoxy, Formylamino oder einen Rest der Formel -NH-CO-$R^1$ oder -NH-CO-$OR^1$ bedeuten, wobei $R^1$ jeweils für $C_1$-$C_6$-Alkyl, das gegebenenfalls durch Hydroxy substituiert ist, Benzyl, Cyclohexyl, Phenyl oder Tolyl steht, |

mit der Maßgabe, daß mindestens einer der Reste $Q^2$ oder $Q^3$ Formylamino bedeutet.

Von besonderem Interesse sind Methinfarbstoffe der Formel Ia, in der

| | |
|---|---|
| $Z^1$ | Wasserstoff, Methyl, Ethyl oder $C_2$-$C_5$-Alkanoylamino, |
| $Z^3$ | und $Z^4$ unabhängig voneinander jeweils $C_1$-$C_6$-Alkyl oder Benzyl, |
| $Q^1$ | Wasserstoff, $C_1$-$C_4$-Alkyl oder $C_2$-$C_5$-Alkanoylamino und |
| $Q^2$ | und $Q^3$ unabhängig voneinander jeweils Wasserstoff, $C_1$-$C_4$-Alkyl, $C_1$-$C_5$-Alkanoylamino, Benzoylamino oder Methylbenzoylamino bedeuten. |

Die Methinfarbstoffe der Formel I können z.B. nach den in der US-A-5 310 942 genannten Methoden erhalten werden.

Beispielsweise kann man eine Nitrosoverbindung der Formel IV

$$K—N=O \qquad (IV),$$

in der K die obengenannte Bedeutung besitzt, mit einem Hydroxyaromaten der Formel V

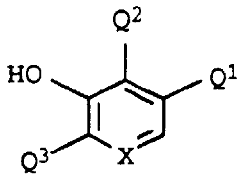

(V),

in der $Q^1$, $Q^2$, $Q^3$ und X jeweils die obengenannte Bedeutung besitzen, kondensieren.

Es ist auch möglich, Amine der Formel VI

$$K—NH_2 \qquad (VI),$$

in der K jeweils die obengenannte Bedeutung besitzt, mit den Hydroxyaromaten der Formel V oxidativ zu kuppeln.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich ein oder mehrere Methinfarbstoffe der Formel I befinden.

Zur Herstellung der für das erfindungsgemäße Verfahren benötigten Farbstoffträger werden die Methinfarbstoffe der Formel I in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffe vorzugsweise in molekulardispers gelöster Form. Die Druckfarbe kann mittels einer Rakel auf den inerten Träger aufgetragen und die Färbung an der Luft getrocknet werden. Geeignete organische Lösungsmittel für die Farbstoffe sind z.B. solche, in denen die Löslichkeit der Farbstoffe bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffe an den inerten Träger abriebfest zu binden vermögen. Dabei werden solche Bindemittel bevorzugt, die die Farbstoffe nach Trocknung der Druckfarbe an der Luft in Form eines klaren, transparenten Films aufnehmen, ohne daß dabei eine sichtbare Auskristallisation der Farbstoffe auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel:Farbstoff beträgt im allgemeinen 1:1 bis 10:1.

Als Hilfsmittel kommen z.B. Trennmittel in Betracht, wie sie in der US-A-5 132 438 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von $\geq$ 300°C aufheizbar sein muß, damit der Farbstofftransfer im Zeitbereich t: $0 < t <$ 15 msec erfolgen kann. Dabei migriert der Farbstoff aus dem Transferblatt und diffundiert in die Oberflächenbeschichtung des Aufnahmemediums.

Die im erfindungsgemäßen Verfahren der Anwendung gelangenden Methinfarbstoffe der Formel I zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe

Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie. Außerdem zeichnen sie sich durch hohe Brillanz aufgrund der hohen Transparenz im blauen und grünen Spektralbereich aus.

Die erfindungsgemäßen Farbstoffe der Formel I eignen sich weiterhin vorteilhaft zum Färben von synthetischen Materialien, z.B. von Polyestern, Polyamiden oder Polycarbonaten. Insbesondere zu nennen sind Materialien in textiler Form, wie Fasern, Garne, Zwirne, Maschenware, Webware oder Non-wovens aus Polyester oder Polyamid, oder auch Polyester-Baumwolle-Mischgewebe. Die neuen Methinfarbstoffe der Formel I sind auch zum Färben von Keratinfasern, z.B. Haaren oder Pelzen, geeignet.

Die neuen Farbstoffe der Formel I eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

A) Herstellung

Beispiel 1

5,35 g (0,025 mol) 4-Diethylamino-2-methylanilin-hydrochlorid und 3,45 g (0,025 mol) 2-Formylamino-3-hydroxypyridin (hergestellt, wie in J. Org. Chem., Band 36, S. 3238 bis 3240, 1971, beschrieben) wurden in 70 ml Methanol gelöst. Zu dieser Lösung wurden 50 ml Wasser und 7,95 g (0,075 mol) Soda, gelost in 50 ml Wasser, gegeben. Sodann wurden 6,8 g (0,03 mol) Ammoniumperoxodisulfat, gelost in 50 ml Wasser, zugetropft. Die Temperatur wurde dabei zwischen 15°C und 20°C gehalten. Man rührte 30 min nach, saugte ab, wusch mit Wasser und trocknete bei Raumtemperatur. Man erhielt in 36 % Ausbeute den Farbstoff der Formel

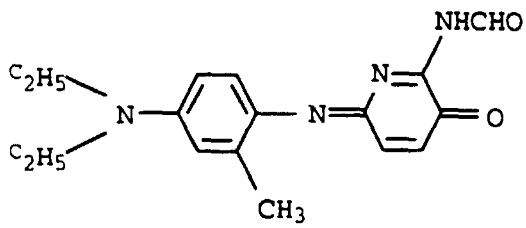

Der Farbstoff wurde aus Isopropanol umkristallisiert.

Fp.: 140°C
$\lambda_{max}$: 633 nm (Tetrahydrofuran)
ε: 65400 $\frac{1}{mol \cdot cm}$ (Chloroform)

Beispiel 2

5,15 g (0,025 mol) 4-Diethylamino-2-acetylaminoanilin wurden in 50 ml Wasser und 20 ml konz. Salzsäure gelöst. Bei 0 bis 5°C wurden 10 ml 23 gew.-%ige wäßrige Natriumnitritlösung zugetropft und 2 h bei 0 bis 5°C nachgerührt. Die resultierende Nitrosoverbindung wurde mit 100 ml Essigester versetzt und mit 25 gew.-%iger wäßriger Ammoniaklösung bei 0 bis 10°C auf einen pH-Wert von 8 gestellt. Die organische Phase wurde abgetrennt, eingeengt und wieder in Methanol gelöst. Diese methanolische Lösung der Nitrosoverbindung wurde mit Raney-Nickel versetzt und mit Wasserstoff reduziert. Nach erfolgter Reduktion wurde der Katalysator abfiltriert und die Lösung eingeengt. Das Konzentrat wurde zu 3,45 g (0,025 mol) 2-Formylamino-3-hydroxypyridin gegeben und mit 70 ml Methanol beide Komponenten gelöst. Dann verdünnte man mit 50 ml Wasser, gab 5,3 g (0,05 mol) Soda, gelöst in 50 ml Wasser, zu und tropfte bei 10 bis 20°C 6,8 g (0,03 mol) Ammoniumperoxodisulfat, gelöst in 50 ml Wasser, zu. Man rührte 30 min nach, saugte ab, wusch mit Methanol/Wasser (1:1 v/v) und dann mit Wasser und trocknete. Man erhielt in 47 % Ausbeute den Farbstoff der Formel

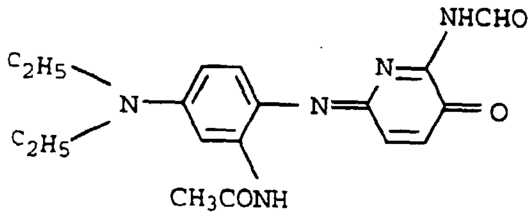

Fp.: 189°C
$\lambda_{max}$: 644 nm (Tetrahydrofuran)

Beispiel 3

8,2 g (0,025 mol) 4-Dibutylamino-2-acetylaminoanilin (79,4 gew.-%ig) wurden analog Beispiel 2 nitrosiert und reduziert. 3,45 g (0,25 mol) 2-Formylamino-3-hydroxypyridin wurden zusammen mit der obigen reduzierten Verbindung in 70 ml Methanol gelöst. 5,3 g (0,05 mol) Soda wurden in fester Form eingestreut, dann wurden 6,8 g (0,03 mol) Ammoniumperoxodisulfat, gelöst in 50 ml Wasser, langsam bei ca. 10°C zugetropft. Man rührte 30 min nach, saugte ab, wusch mit Wasser und trocknete bei Raumtemperatur. Man erhielt in 15 % Ausbeute den Farbstoff der Formel

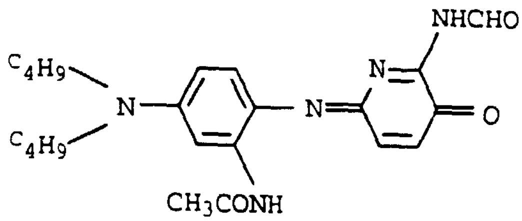

Fp.: 155°C
$\lambda_{max}$: 648 nm (Tetrahydrofuran)
ε: 106000 $\frac{1}{mol \cdot cm}$ (Chloroform)

In ähnlicher Weise wurden die Farbstoffe der folgenden Tabellen 1 und 2 erhalten. Die Tabellen enthalten neben dem Absorptionsmaximum (gemessen in Tetrahydrofuran) auch den $R_f$-Wert auf Silicagel und das bei der Chromatographie verwendete Laufmittel Toluol (T)/Essigester (E) im angegebenen Volumenverhältnis.

Tabelle 1

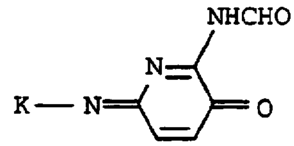

| Bsp. Nr. | K | $\lambda_{max}$ [nm] | $R_f$-Wert | T/E |
|---|---|---|---|---|
| 4 | 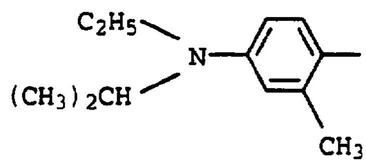 | 638 | 0,49 | 3:2 |
| 5 | 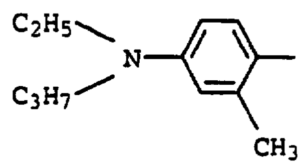 | 636 | 0,43 | 3:2 |
| 6 | 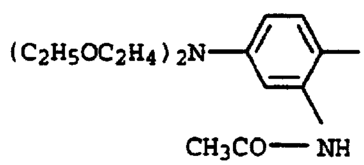 | 640 | 0,31 | 0:1 |
| 7 | 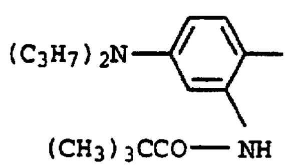 | 652 | 0,43 | 3:2 |
| 8 | 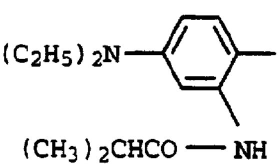 | 646 | 0,27 | 3:2 |
| 9 | 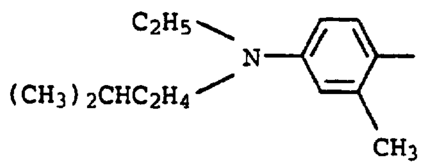 | 637 | 0,50 | 3:2 |
| 10 | 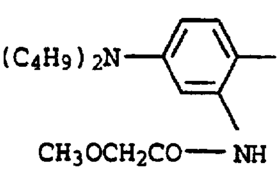 | 645 | 0,22 | 3:2 |

| Bsp. Nr. | K | $\lambda_{max}$ [nm] | $R_f$-Wert | T/E |
|---|---|---|---|---|
| 11 | 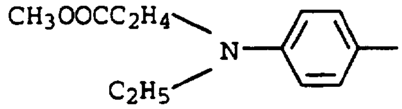 | 607 | 0,50 | 0:1 |
| 12 | 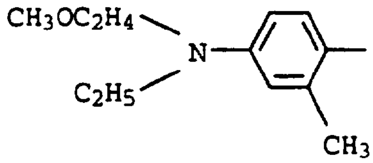 | 628 | 0,26 | 3:2 |
| 13 | 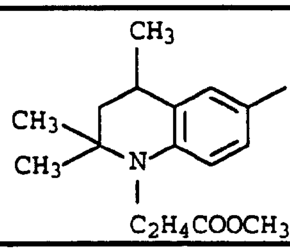 | 626 | 0,28 | 3:2 |
| 14 | 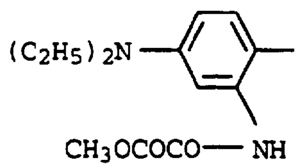 | 640 | 0,17 | 3:2 |
| 15 | 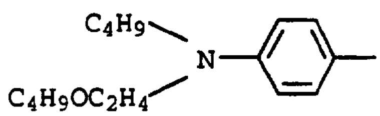 | 653 | 0,43 | 3:2 |
| 16 | 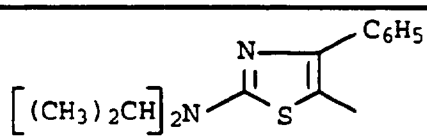 | 629 | | |
| 17 | 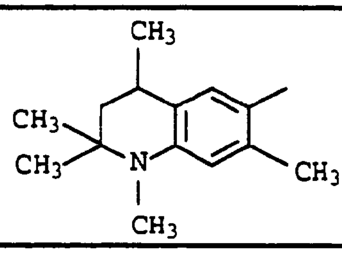 | | 0,39 | 3:2 |
| 18 | 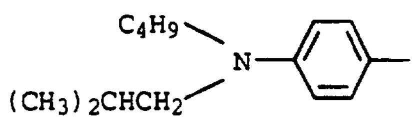 | 622 | 0,45 | 3:2 |
| 19 | 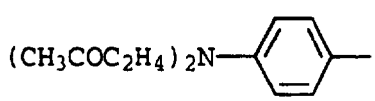 | 609 | 0,23 | 3:2 |

| Bsp. Nr. | K | $\lambda_{max}$ [nm] | $R_f$-Wert | T/E |
|---|---|---|---|---|
| 20 | 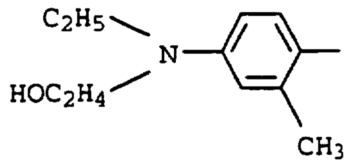 | 620 | 0,40 | 3:2 |
| 21 | 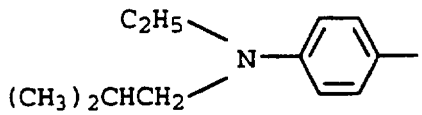 | 620 | 0,35 | 3:2 |
| 22 | 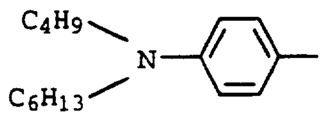 | 622 | 0,35 | 3:2 |
| 23 | 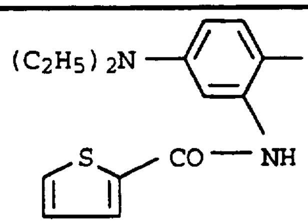 | 634 | 0,25 | 3:2 |
| 24 | 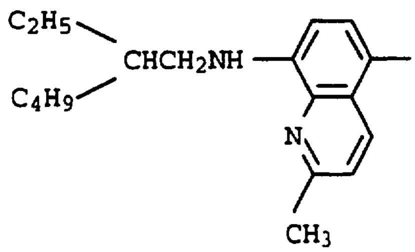 | 650 | 0,35 | 3:2 |
| 25 | 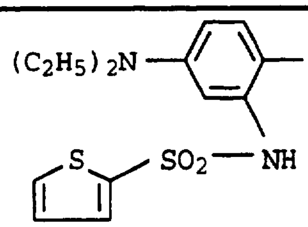 | 631 | 0,32 | 3:2 |

Tabelle 2

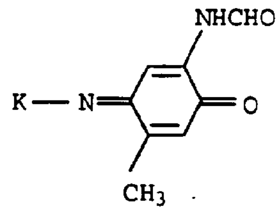

| Bsp. Nr. | K | $\lambda_{max}$ [nm] | $R_f$-Wert | T/E |
|---|---|---|---|---|
| 26 | 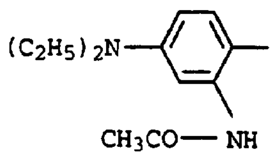 | 628 | 0,20 | 3:2 |
| 27 | 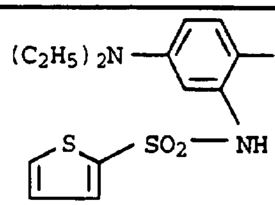 | 614 | 0,33 | 3:2 |
| 28 | 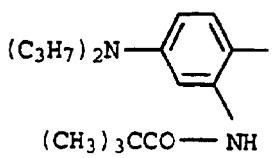 | 640 | 0,40 | 3:2 |
| 29 | 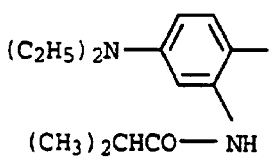 | 631 | 0,27 | 3:2 |
| 30 | 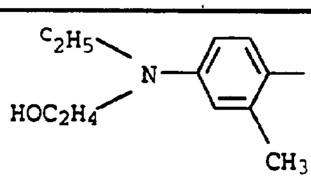 | 626 | 0,31 | 3:2 |
| 31 | 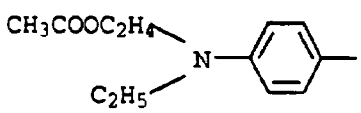 | 598 | 0,26 | 3:2 |
| 32 | 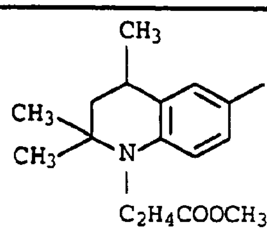 | 614 | 0,37 | 3:2 |

| Bsp. Nr. | K | $\lambda_{max}$ [nm] | $R_f$-Wert | T/E |
|---|---|---|---|---|
| 33 | 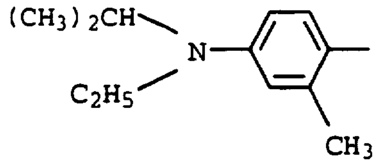 | 626 | 0,29 | 3:2 |
| 34 | 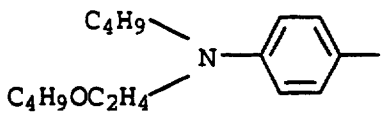 | 607 | 0,46 | 3:2 |
| 35 | 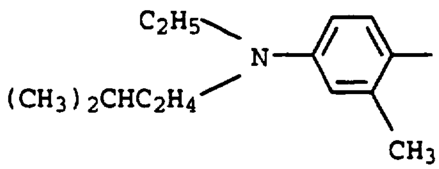 | 627 | 0,46 | 3:2 |
| 36 | 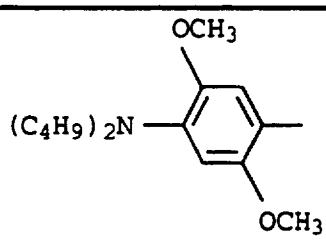 | 642 | 0,52 | 0:1 |

Auch die im folgenden genannten Farbstoffe zeigen vorteilhafte Eigenschaften.

| Bsp. Nr. | | Farbton |
|---|---|---|
| 37 | 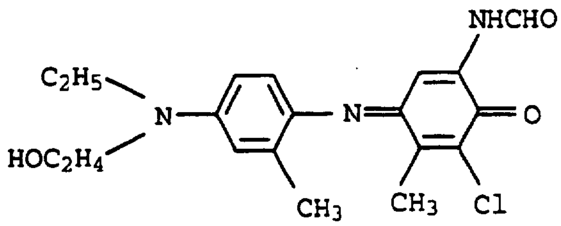 | cyan |
| 38 | 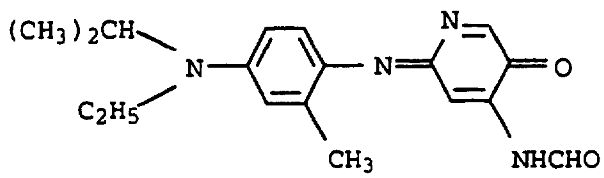 | cyan |
| 39 | 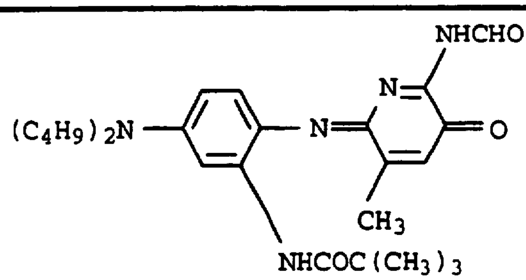 | cyan |
| 40 | 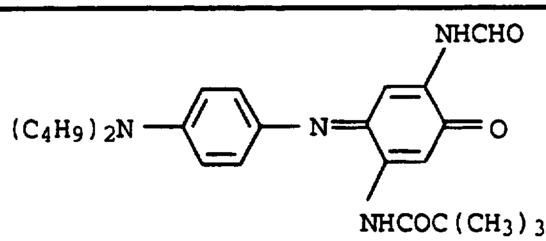 | blau |
| 41 | 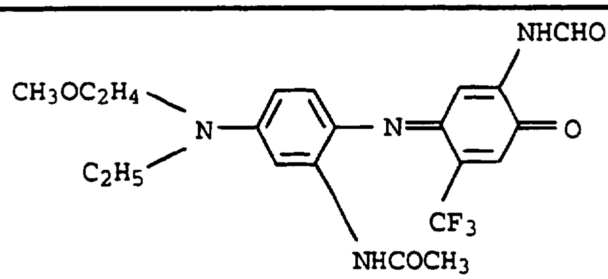 | cyan |
| 42 | 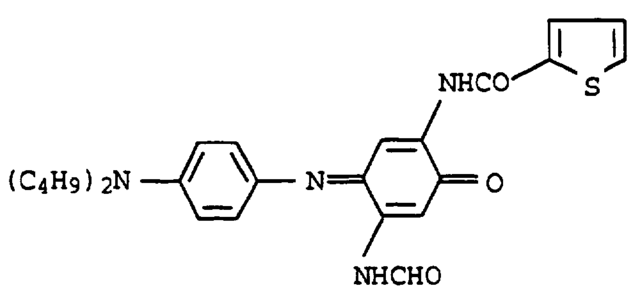 | cyan |

| Bsp. Nr. | | Farbton |
|---|---|---|
| 43 | 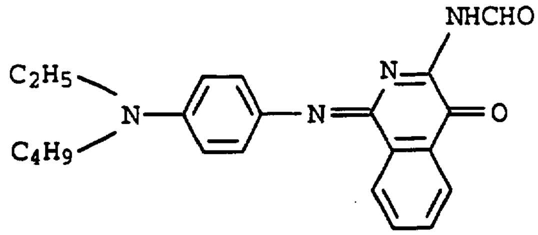 | türkis |
| 44 | 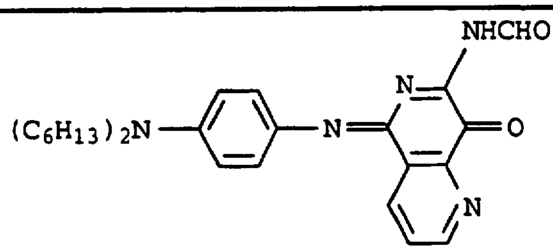 | türkis |
| 45 | 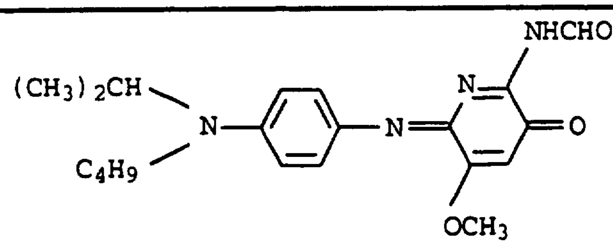 | cyan |
| 46 | 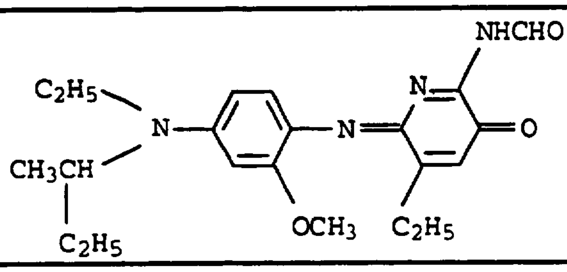 | cyan |
| 47 | 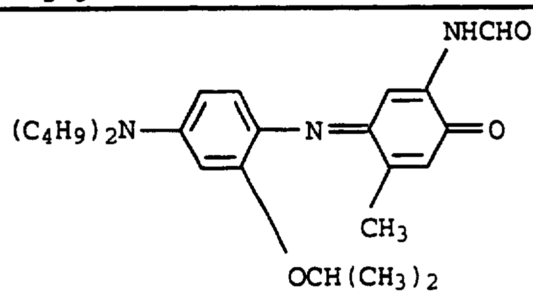 | cyan |
| 48 | 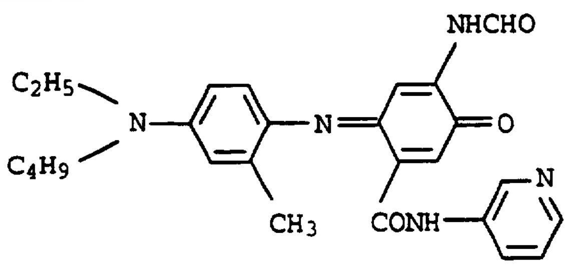 | blau |

| Bsp. Nr. | | Farbton |
|---|---|---|
| 49 | 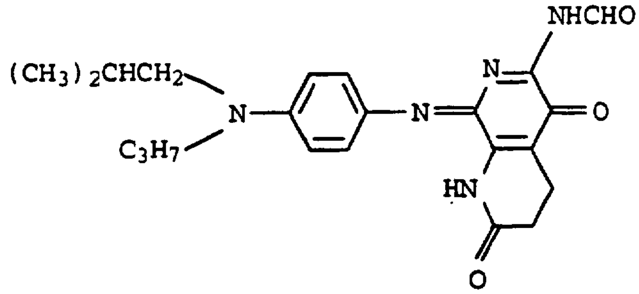 | cyan |
| 50 | 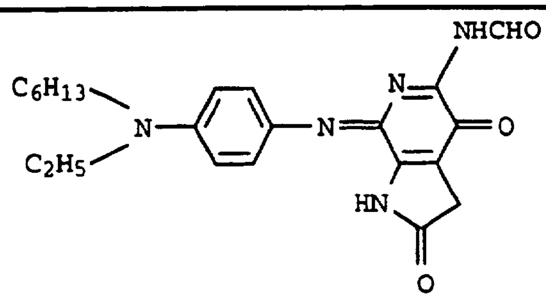 | cyan |
| 51 | 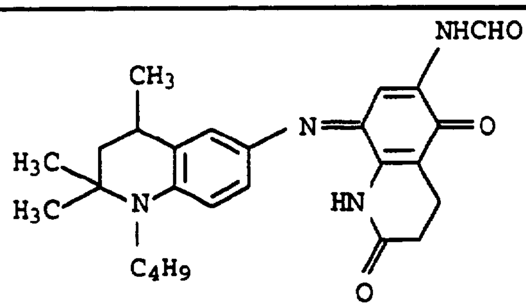 | cyan |
| 52 | 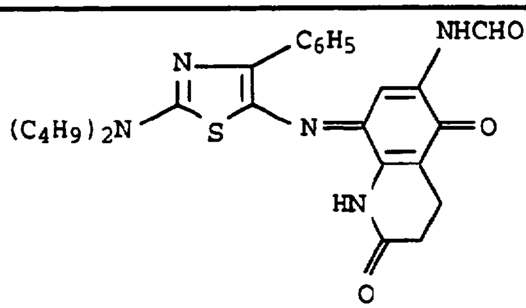 | cyan |
| 53 | 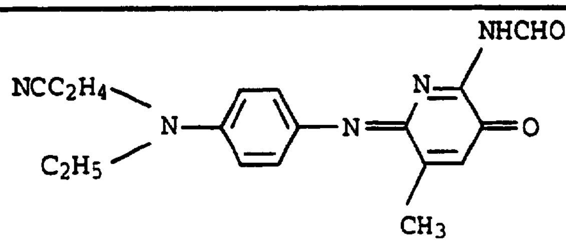 | blau |

B) Anwendung im Thermotransfer

Allgemeine Vorschrift:

a) 10 g Farbstoff werden, gegebenenfalls unter kurzzeitigem Erwärmen auf 80 bis 90°C, in 100 g einer 10 gew.-%igen Lösung eines Bindemittels in einem Methylethylketon/Toluol/Cyclohexanon-Gemisch (4,5:2:2 v/v/v) eingerührt.

Das Gemisch wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.

b) Die Farbbänder werden auf einer rechnergesteuerten Versuchsanordnung, die mit einem handelsüblichen Thermokopf ausgestattet ist, auf handelsübliches Videoprintpapier verdruckt.

Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,5 und 2,0 mJ/Dot.

Da die Höhe der Anfärbung direkt proportional der zugeführten Energie ist, kann ein Farbkeil erzeugt und spektroskopisch ausgewertet werden.

Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind in der folgenden Tabelle aufgeführt. Sofern nichts anderes vermerkt ist, wurde ein Bindemittel auf Basis von gesättigtem linearen Polyester und als Aufnahmemedium Color-Videoprintpapier der Fa. Hitachi benutzt.

Tabelle 3

| Farbstoff Nr. | Q* $\left[\frac{mJ}{Dot}\right]$ | m $\left[\frac{1}{mJ}\right]$ |
|---|---|---|
| 1 | 0,74<br>0,75 a)<br>1,08 b) | 4,4<br>4,4 a)<br>3,9 b) |
| 2 | 0,93<br>0,85 a)<br>1,29 b) | 2,9<br>2,9 a)<br>2,3 b) |
| 4 | 0,77 | 4,1 |
| 5 | 0,76 | 3,9 |
| 6 | 0,90 | 2,9 |
| 7 | 0,92 | 3,0 |
| 10 | 0,90 | 3,2 |
| 19 | 1,02 | 4,0 |

a) Bindemittel: Polyvinylbutyral

b) Bindemittel: Cellulosepropionat
Aufnahmemedium: Color-Videoprintpapier (SV 100) der Fa. Kodak

## Patentansprüche

1. Methinfarbstoffe der Formel I

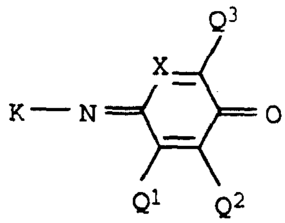

(I),

in der

| | |
|---|---|
| K | einen 5- oder 6-gliedrigen carbocyclischen oder heterocyclischen Rest, |
| X | Stickstoff oder einen Rest der Formel C—$Q^1$ und |
| $Q^1$, $Q^2$ und $Q^3$ | unabhängig voneinander jeweils Wasserstoff, $C_1$-$C_6$-Alkyl, das gegebenenfalls durch 1 oder 2 Sauerstoffatome in Etherfunktion unterbrochen ist, Benzyl, $C_3$-$C_8$-Cycloalkyl, gegebenenfalls substituiertes Phenyl, $C_1$-$C_4$-Fluorallqyl, $C_1$-$C_6$-Alkoxy, Benzyloxy, gegebenenfalls substituiertes Phenoxy, $C_1$-$C_6$-Alkylthio, Halogen, Cyano, Formylamino oder einen Rest der Formel $R^3$, -CO-O$R^1$, -CO-NH$R^1$, -CO-NH-CO-$R^1$, -CO-NH-CO-$R^3$, -CO-NH-$SO_2$-$R^3$, -NH-CO-$R^1$, -NH-CO-O$R^1$, -NH-CO-N$R^1R^2$, NH-CS-O$R^1$, -NH-CS-N$R^1R^2$, -NH-CO-$R^3$, -NH-$SO_2$-$R^1$, -NH-$SO_2$-$R^3$ oder -NH-$SO_2$-N$R^1R^2$, worin $R^1$ und $R^2$ unabhängig voneinander jeweils für $C_1$-$C_{13}$-Alkyl, das gegebenenfalls substituiert ist und durch 1 bis 3 Sauerstoffatome in Etherfunktion unterbrochen sein kann, $C_3$-$C_8$-Cycloalkyl, gegebenenfalls substituiertes Phenyl oder -N$R^1R^2$ auch für Amino und $R^3$ für einen 5- oder 6-gliedrigen aromatischen heterocyclischen Rest, der gegebenenfalls benzoanelliert ist und ein oder mehrere Heteroatome, ausgewählt aus der Gruppe, bestehend aus Stickstoff, Sauerstoff und Schwefel, aufweist, stehen, oder $Q^1$ und $Q^2$ zusammen mit den Kohlenstoffatomen, an die sie geknüpft sind, einen 5- oder 6-gliedrigen carbocyclischen oder heterocyclischen Ring bedeuten, |

mit der Maßgabe, daß mindestens einer der Reste $Q^1$, $Q^2$ oder $Q^3$ Formylamino bedeutet.

**2.** Methinfarbstoffe nach Anspruch 1, dadurch gekennzeichnet, daß K einen Rest der Formel

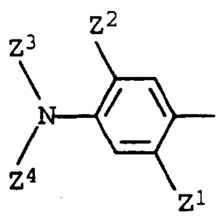

,

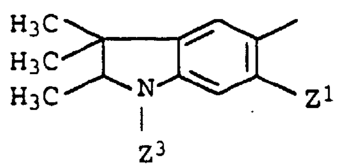

,

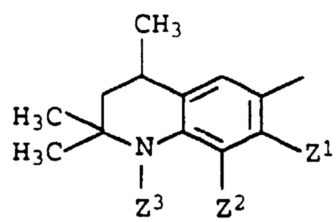

,

(IIa) (IIb) (IIc)

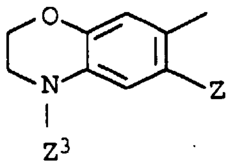 , 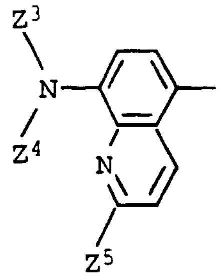 , 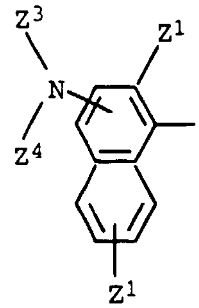 ,

(IId) (IIe) (IIf)

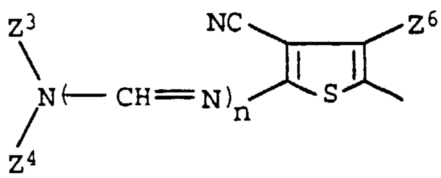 , 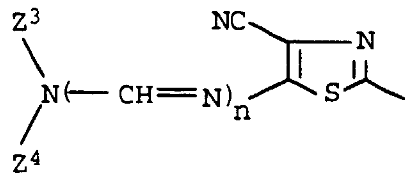 ,

(IIg) (IIh)

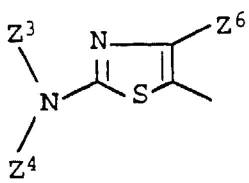 oder 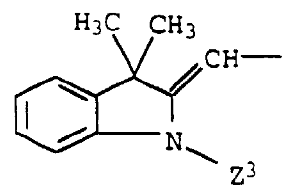

(IIi) (IIj)

bedeutet, worin

n für 0 oder 1,

$Z^1$ für Wasserstoff, $C_1$-$C_6$-Alkyl, das gegebenenfalls durch 1 oder 2 Sauerstoffatome in Etherfunktion unterbrochen ist, Hydroxy, $C_1$-$C_6$-Alkoxy, $C_1$-C6-Alkylsulfonylamino, $C_1$-$C_6$-Mono- oder Dialkylaminosulfonylamino oder den Rest -NHCOZ$^7$ oder -NHCO$_2$Z$^7$, wobei $Z^7$ die Bedeutung von Phenyl, Benzyl, Tolyl oder $C_1$-$C_6$-Alkyl, das gegebenenfalls durch ein Sauerstoffatom in Etherfunktion unterbrochen ist, besitzt,

$Z^2$ für Wasserstoff, Halogen, $C_1$-$C_6$-Alkyl oder $C_1$-$C_6$-Alkoxy,

$Z^3$ und $Z^4$ unabhängig voneinander jeweils für Wasserstoff, $C_1$-$C_{13}$-Alkyl, das gegebenenfalls substituiert ist und durch 1 bis 3 Sauerstoffatome in Etherfunktion unterbrochen sein kann, $C_3$-$C_4$-Alkenyl, $C_3$-$C_8$-Cycloalkyl, Phenyl oder Tolyl oder zusammen mit dem sie verbindenden Stickstoffatom für einen 5- oder 6-gliedrigen gesättigten heterocyclischen Rest, der gegebenenfalls weitere Heteroatome enthält,

$Z^5$ für Wasserstoff oder $C_1$-$C_6$-Alkyl und

$Z^6$ für Wasserstoff, Halogen, $C_1$-$C_6$-Alkyl, gegebenenfalls substituiertes Phenyl, gegebenenfalls substituiertes Benzyl, $C_3$-$C_8$-Cycloalkyl, Thienyl, Hydroxy, $C_1$-$C_6$-Alkoxy, $C_1$-$C_6$-Alkylthio oder $C_1$-$C_6$-Monoalkylamino stehen.

**3.** Methinfarbstoffe nach den Ansprüchen 1 und 2, dadurch gekennzeichnet, daß $Q^1$, $Q^2$ und $Q^3$ unabhängig voneinander jeweils Wasserstoff, Halogen, $C_1$-$C_4$-Alkyl, $C_1$-$C_4$-Alkoxy, Formylamino oder einen Rest der Formel -NH-CO-$R^1$ oder -NH-CO-O$R^1$ bedeuten, worin $R^1$ jeweils die in Anspruch 1 genannte Bedeutung besitzt.

**4.** Methinfarbstoffe nach den Ansprüchen 1 bis 3, dadurch gekennzeichnet, daß K einen Rest der Formel IIa, IIc oder IIi bedeutet.

**5.** Methinfarbstoffe nach den Ansprüchen 1 bis 4, dadurch gekennzeichnet, daß $Q^1$ Wasserstoff, $C_1$-$C_4$-Alkyl, Halogen oder einen Rest der Formel -NH-CO-$R^1$, worin $R^1$ für $C_1$-$C_6$-Alkyl, das gegebenenfalls durch Phenyl, Halogen oder Hydroxy substituiert ist, oder Cyclohexyl steht, und $Q^2$ und $Q^3$ unabhängig voneinander jeweils Wasserstoff $C_1$-$C_4$-Alkyl, Formylamino oder einen Rest der Formel -NH-CO-$R^1$, worin $R^1$ für $C_1$-$C_6$-Alkyl oder Tolyl steht, bedeuten.

**6.** Methinfarbstoffe nach den Ansprüchen 1 bis 5, die der Formel Ia

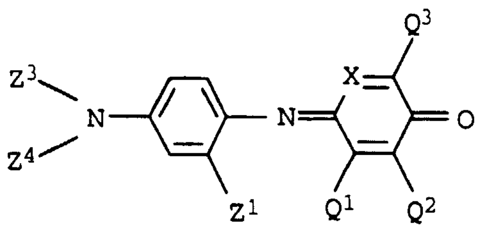

(Ia)

gehorchen, in der

X Stickstoff oder einen Rest der Formel C—$Q^1$,

$Z^1$ Wasserstoff, $C_1$-$C_4$-Alkyl oder $C_2$-$C_5$-Alkanoylamino,

$Z^3$ und $Z^4$ unabhängig voneinander jeweils $C_1$-$C_6$-Alky, das gegebenenfalls durch Hydroxy substituiert ist, Benzyl, Cyclohexyl, Phenyl oder Tolyl,

$Q^1$ Wasserstoff, $C_1$-$C_4$-Alkyl, $C_1$-$C_4$-Alkoxy oder einen Rest der Formel -NH-CO-$R^1$ und

$Q^2$ und $Q^3$ unabhängig voneinander jeweils Wasserstoff, $C_1$-$C_4$-Alkyl, $C_1$-$C_4$-Alkoxy, Formylamino oder einen Rest der Formel -NH-CO-$R^1$ oder -NH-CO-O$R^1$ bedeuten, wobei $R^1$ jeweils für $C_1$-$C_6$-Alkyl, das gegebenenfalls durch Hydroxy substituiert ist, Benzyl, Cyclohexyl, Phenyl oder Tolyl steht,

mit der Maßgabe, daß mindestens einer der Reste $Q^2$ oder $Q^3$ Formylamino bedeutet.

**7.** Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Methinfarbstoffe gemäß Anspruch 1 befinden.

## Claims

**1.** Methine dyes of the formula I

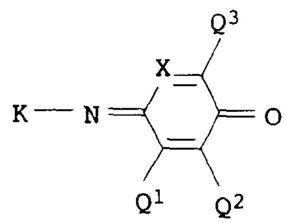

(I),

where

K is a 5- or 6-membered carbocyclic or heterocyclic radical,

X is nitrogen or a radical of the formula C—$Q^1$, and

$Q^1$, $Q^2$ and $Q^3$ are independently of one another hydrogen, $C_1$-$C_6$-alkyl with or without interruption by 1 or 2 oxygen atoms in ether function, benzyl, $C_3$-$C_8$-cycloalkyl, substituted or unsubstituted phenyl, $C_1$-$C_4$-fluoroalkyl, $C_1$-$C_6$-alkoxy, benzyloxy, substituted or unsubstituted phenoxy, $C_1$-$C_6$-alkylthio, halogen, cyano, formylamino or a radical of the formula $R^3$, -CO-$OR^1$, -CO-$NHR^1$, -CO-NH-CO-$R^1$, -CO-NH-CO-$R^3$, -CO-NH-$SO_2$-$R^3$, -NH-CO-$R^1$, -NH-CO-$OR^1$, -NH-CO-$NR^1R^2$, NH-CS-$OR^1$, -NH-CS-$NR^1R^2$, -NH-CO-$R^3$, -NH-$SO_2$-$R^1$, -NH-$SO_2$-$R^3$ or -NH-$SO_2$-$NR^1R^2$, wherein $R^1$ and $R^2$ are independently of each other $C_1$-$C_{13}$-alkyl with or without substitution and with or without interruption by from 1 to 3 oxygen atoms in ether function, $C_3$-$C_8$-cycloalkyl or substituted or unsubstituted phenyl, or else -$NR^1R^2$ is amino, and $R^3$ is a 5- or 6-membered aromatic heterocyclic radical with or without benzofusion and with one or more hetero atoms selected from the group consisting of nitrogen, oxygen and sulfur, or $Q^1$ and $Q^2$ are together with the carbon atoms to which they are attached a 5- or 6-membered carbocyclic or heterocyclic ring,

with the proviso that at least one of $Q^1$, $Q^2$ or $Q^3$ is formylamino.

**2.** Methine dyes as claimed in claim 1, wherein K is a radical of the formula

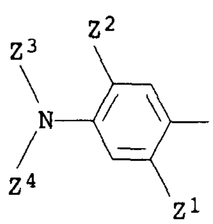

,

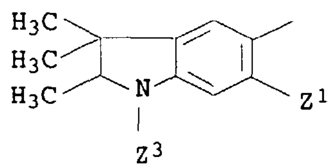

,

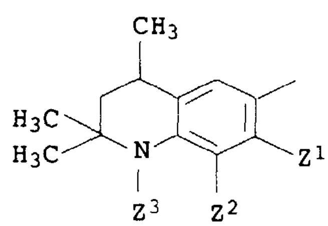

,

(IIa) (IIb) (IIc)

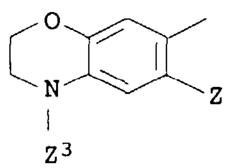

(IId)

,

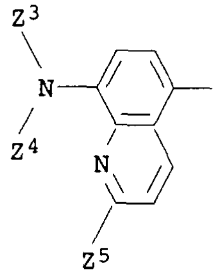

(IIe)

,

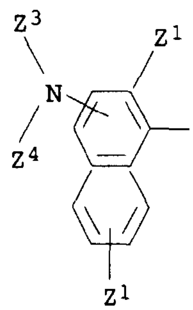

(IIf)

,

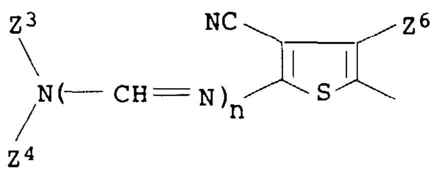

(IIg)

,

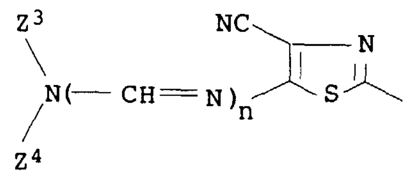

(IIh)

,

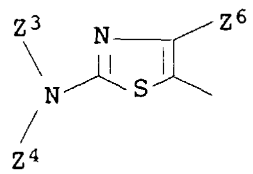

(IIi)

or

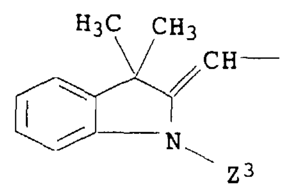

(IIj)

where

n is 0 or 1,

$Z^1$ is hydrogen, $C_1$-$C_6$-alkyl with or without interruption by 1 or 2 oxygen atoms in ether function, hydroxyl, $C_1$-$C_6$-alkoxy, $C_1$-$C_6$-alkylsulfonylamino, mono- or di($C_1$-$C_6$-alkyl)aminosulfonylamino or the radical $-NHCOZ^7$ or $-NHCO_2Z^7$, wherein $Z^7$ is phenyl, benzyl, tolyl or $C_1$-$C_6$-alkyl with or without interruption by an oxygen atom in ether function,

$Z^2$ is hydrogen, halogen, $C_1$-$C_6$-alkyl or $C_1$-$C_6$-alkoxy,

$Z^3$ and $Z^4$ are independently of each other hydrogen, $C_1$-$C_{13}$-alkyl with or without substitution and with or without interruption by from 1 to 3 oxygen atoms in ether function, $C_3$-$C_4$-alkenyl, $C_3$-$C_8$-cycloalkyl, phenyl or tolyl or are together with the nitrogen atom joining them together a 5- or 6-membered saturated heterocyclic radical with or without further hetero atoms,

$Z^5$ is hydrogen or $C_1$-$C_6$-alkyl, and

$Z^6$ is hydrogen, halogen, $C_1$-$C_6$-alkyl, substituted or unsubstituted phenyl, substituted or unsubstituted benzyl, $C_3$-$C_8$-cycloalkyl, thienyl, hydroxyl, $C_1$-$C_6$-alkoxy, $C_1$-$C_6$-alkylthio or $C_1$-$C_6$-monoalkylamino.

3. Methine dyes as claimed in claim 1 or 2, wherein $Q^1$, $Q^2$ and $Q^3$ are independently of one another hydrogen, halogen, $C_1$-$C_4$-alkyl, $C_1$-$C_4$-alkoxy, formylamino or a radical of the formula -NH-CO-$R^1$ or -NH-CO-O$R^1$, where $R^1$ is in each case as defined in claim 1.

4. Methine dyes as claimed in any of claims 1 to 3, wherein K is a radical of the formula IIa, IIc or IIi.

5. Methine dyes as claimed in any of claims 1 to 4, wherein $Q^1$ is hydrogen, $C_1$-$C_4$-alkyl, halogen or a radical of the formula -NH-CO-$R^1$ where $R^1$ is $C_1$-$C_6$-alkyl which may be phenyl-, halogen- or hydroxyl-substituted or cyclohexyl, and $Q^2$ and $Q^3$ are independently of each other hydrogen, $C_1$-$C_4$-alkyl, formylamino or a radical of the formula -NH-CO-$R^1$ where $R^1$ is $C_1$-$C_6$-alkyl or tolyl.

6. Methine dyes as claimed in any of claims 1 to 5 conforming to the formula Ia

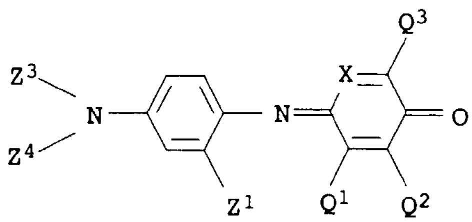

(Ia)

where

X is nitrogen or a radical of the formula C—$Q^1$,

$Z^1$ is hydrogen, $C_1$-$C_4$-alkyl or $C_2$-$C_5$-alkanoylamino,

$Z^3$ and $Z^4$ are independently of each other $C_1$-$C_6$-alkyl which may be hydroxyl-substituted, benzyl, cyclohexyl, phenyl or tolyl,

$Q^1$ is hydrogen, $C_1$-$C_4$-alkyl, $C_1$-$C_4$-alkoxy or a radical of the formula -NH-CO-$R^1$, and

$Q^2$ and $Q^3$ are independently of each other hydrogen, $C_1$-$C_4$-alkyl, $C_1$-$C_4$-alkoxy, formylamino or a radical of the formula -NH-CO-$R^1$ or -NH-CO-O$R^1$ where $R^1$ is in each case $C_1$-$C_6$-alkyl which may be hydroxyl-substituted, benzyl, cyclohexyl, phenyl or tolyl,

with the proviso that at least one of $Q^2$ or $Q^3$ is formylamino.

7. A process for transferring dyes from a transfer to plastic-coated paper by diffusion or sublimation with the aid of an energy source, which comprises using a transfer on which there is or are one or more methine dyes as claimed in claim 1.

## Revendications

1. Colorants méthiniques de formule I

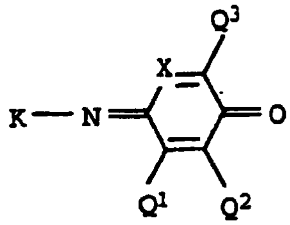

(I),

dans laquelle

| | |
|---|---|
| K | représente un reste hétérocyclique ou carboxylique à 5 ou 6 maillons, |
| X | représente un atome d'azote ou un reste de formule C-$Q^1$ et |
| $Q^1$, $Q^2$ et $Q^3$ | représentent chacun indépendamment les uns des autres un atome d'hydrogène, un groupement alkyle en $C_1$-$C_6$, pouvant éventuellement être interrompu par 1 ou 2 atomes d'oxygène en fonction éther, un groupement benzyle, cycloalkyle en $C_3$-$C_8$, un groupement phényle éventuellement substitué, un groupement fluoroalkyle en $C_1$-$C_4$, alcoxy en $C_1$-$C_6$, benzyloxy, un groupement phénoxy éventuellement substitué, un groupement alkylthio en $C_1$-$C_6$, un atome d'halogène, un groupement cyano, formylamino ou un reste de formule $R^3$, -CO-$OR^1$, -CO-$NHR^1$, -CO-NH-CO-$R^1$, -CO-NH-CO-$R^3$, -CO-NH-$SO_2$-$R^3$, -NH-CO-$R^1$, -NH-CO-$OR^1$, -NH-CO-$NR^1R^2$, NH-CS-$OR^1$, -NH-CS-$NR^1R^2$, -NH-CO-$R^3$, -NH-$SO_2$-$R^1$, -NH-$SO_2$-$R^3$ ou -NH-$SO_2$-$NR^1R^2$, où $R^1$ et $R^2$ peuvent chacun être mis pour un groupement alkyle en $C_1$-$C_{13}$ pouvant être substitué et pouvant être interrompu par 1 à 3 atomes d'oxygène en fonction éther, un groupement cycloalkyle en $C_3$-$C_8$, un groupement phényle éventuellement substitué ou -$NR^1R^2$, un groupement amino et $R^3$ représente un reste hétérocyclique aromatique à 5 ou 6 maillons éventuellement benzocondensé et pouvant présenter un ou plusieurs hétéroatomes, choisis dans le groupe formé par l'azote, l'oxygène et le soufre, ou bien $Q^1$ et $Q^2$ forment ensemble, avec les atomes de carbone auxquels ils sont reliés, un cycle hétérocyclique ou carbocyclique à 5 ou 6 maillons, |

étant spécifié que l'un au moins des restes $Q^1$, $Q^2$ ou $Q^3$ représente un groupement formylamino.

**2.** Colorant méthinique selon la revendication 1, caractérisé en ce que K représente un reste de formule

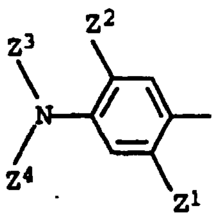
,
(IIa)

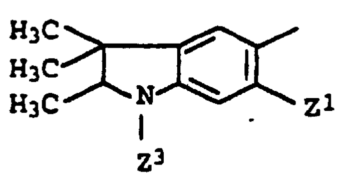
,
(IIb)

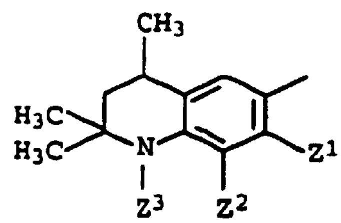
,
(IIc)

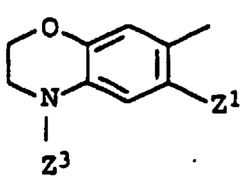
,
(IId)

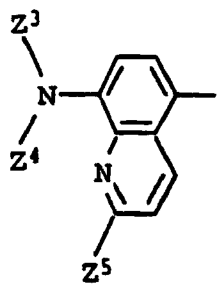
,
(IIe)

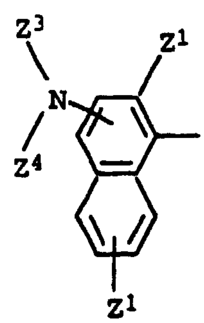
,
(IIf)

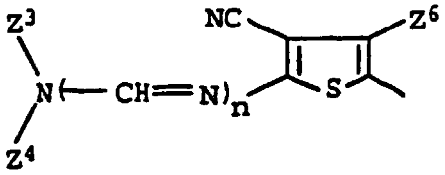

,

(IIg)

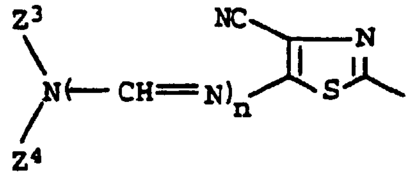

,

(IIh)

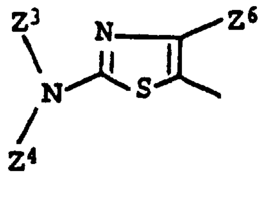

(IIi)

ou

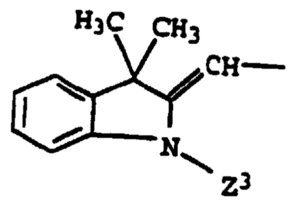

(IIj)

dans lesquelles

- n vaut 0 ou 1,
- $Z^1$ représente un atome d'hydrogène, un groupement alkyle en $C_1$-$C_6$ éventuellement interrompu par 1 ou 2 atomes d'oxygène en fonction éther, un groupement hydroxyle, alcoxy en $C_1$-$C_6$, (alkyle en $C_1$-$C_6$)sulfonylamino, mono- ou di(alkyle en $C_1$-$C_6$)aminosulfonylamino ou le reste -NHCOZ$^7$ ou -NHCO$_2$Z$^7$, où $Z^7$ prend la signification d'un groupement phényle, benzyle, tolyle ou alkyle en $C_1$-$C_6$, pouvant être interrompu par un atome d'oxygène en fonction éther,
- $Z^2$ représente un atome d'hydrogène, d'halogène, un groupement alkyle en $C_1$-$C_6$ ou alcoxy en $C_1$-$C_6$,
- $Z^3$ et $Z^4$ représentent chacun, indépendamment de l'autre, un atome d'hydrogène, un groupement alkyle en $C_1$-$C_{13}$ éventuellement substitué et pouvant être interrompu par 1 à 3 atomes d'oxygène en fonction éther, un groupement alcényle en $C_3$-$C_4$, cycloalkyle en $C_3$-$C_8$, phényle ou tolyle ou bien, forment ensemble avec l'atome d'azote qui les relie, un reste hétérocyclique saturé à 5 ou 6 maillons, pouvant contenir d'autres hétéroatomes,
- $Z^5$ représente un atome d'hydrogène ou un groupement alkyle en $C_1$-$C_6$, et
- $Z^6$ représente un atome d'hydrogène, d'halogène, un groupement alkyle en $C_1$-$C_6$, un groupement phényle éventuellement substitué, un groupement benzyle éventuellement substitué, un groupement cycloalkyle en $C_3$-$C_8$, thiényle, hydroxyle, alcoxy en $C_1$-$C_6$, (alkyle en $C_1$-$C_6$)thio ou mono(alkyle en $C_1$-$C_6$)amino.

**3.** Colorant méthinique selon les revendications 1 et 2, caractérisé en ce que $Q^1$, $Q^2$ et $Q^3$ représentent chacun, indépendamment les uns des autres, un atome d'hydrogène, d'halogène, un groupement alkyle en $C_1$-$C_4$, alcoxy en $C_1$-$C_4$, formylamino ou un reste de formule -NH-CO-R$^1$ ou -NH-CO-OR$^1$, où $R^1$ prend à chaque fois la signification mentionnée dans la revendication 1.

**4.** Colorant méthinique selon les revendications 1 à 3, caractérisé en ce que K représente un reste de formule IIa, IIC ou IIi.

**5.** Colorant méthinique selon les revendications I à 4, caractérisé en ce que $Q^1$ représente un atome d'hydrogène, un groupement alkyle en $C_1$-$C_4$, un atome d'halogène ou un reste de formule -NH-CO-R$^1$, où $R^1$ est mis pour un groupement alkyle en $C_1$-$C_6$, pouvant être substitué par un groupement phényle, par un atome d'halogène ou par un groupement hydroxyle, ou pour un groupement cyclohexyle, et $Q^2$ et $Q^3$ représentent chacun, indépendamment de l'autre, un atome d'hydrogène, un groupement alkyle en $C_1$-$C_4$, formylamino ou un reste de formule -NH-CO-R$^1$, où $R^1$ est mis pour un groupement alkyle en $C_1$-$C_6$ ou tolyle.

**6.** Colorant méthinique selon les revendications 1 à 5, correspondant à la formule Ia

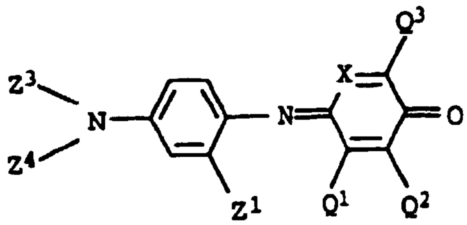

(Ia)

dans laquelle

X représente un atome d'azote ou un reste de formule C-$Q^1$,

$Z^1$ représente un atome d'hydrogène, un groupement alkyle en $C_1$-$C_4$ ou alcanoylamino en $C_2$-$C_5$,

$Z^3$ et $Z^4$ représentent chacun, indépendamment de l'autre, un groupement alkyle en $C_1$-$C_6$, éventuellement substitué par un groupement hydroxyle, un groupement benzyle, cyclohexyle, phényle ou tolyle,

$Q^1$ représente un atome d'hydrogène, un groupement alkyle en $C_1$-$C_4$, alcoxy en $C_1$-$C_4$, ou un reste de formule -NH-CO-$R^1$ et

$Q^2$ et $Q^3$ représentent chacun, indépendamment de l'autre, un atome d'hydrogène, un groupement alkyle en $C_1$-$C_4$, alcoxy en $C_1$-$C_4$, formylamino ou un reste de formule -NH-CO-$R^1$ ou -NH-CO-O$R^1$, où $R^1$ est mis à chaque fois pour un groupement alkyle en $C_1$-$C_6$ éventuellement substitué par un groupement hydroxyle, pour un groupement benzyle, cyclohexyle, phényle ou tolyle,

étant spécifié que l'un au moins des restes $Q^2$ ou $Q^3$ représente un groupement formylamino.

**7.** Procédé de transfert de colorants d'un support sur un papier enduit de matière plastique, par diffusion ou sublimation, à l'aide d'une source d'énergie, caractérisé en ce que l'on utilise un support sur lequel se trouvent un ou plusieurs colorants méthiniques selon la revendication 1.